# EUROPEAN PATENT SPECIFICATION

(11) **EP 1 803 985 B1**
(45) Date of publication and mention of the grant of the patent: **28.07.2010**
(21) Application number: 06026632.7
(22) Date of filing: 21.12.2006
(51) Int. Cl.: F16M 11/00, H04N 5/64

(54) **Panel-type television**
Flachbildschirmfernseher
Télévision à écran plat

(30) Priority: 27.12.2005 JP 2005375052
(43) Date of publication of application: 04.07.2007
(73) Proprietor: Funai Electric Co., Ltd., Daito-shi, Osaka (JP)
(72) Inventor: Yamanaka, Takahito c/o Funai Electric Co., Ltd., Daito-shi Osaka (JP)
(74) Representative: Grünecker, Kinkeldey, Stockmair & Schwanhäusser Anwaltssozietät

(56) References cited:
- EP-A1- 1 298 520
- JP-A- 8 204 348
- US-A1- 2003 025 063
- US-A1- 2005 050 784
- US-A1- 2005 167 566

## Description

The present invention relates a panel-type television which can stand vertically and be mounted onto a wall and, more particularly, to a panel-type television in which stands for allowing the television to stand vertically from the floor can be stored according to the preamble of claim 1.

Hitherto, in a panel-type television, stands for allowing the entire panel-type television to stand vertically are inevitably required to be dimensioned so as to become longest in a depth direction in the entire panel-type television in order that the stands can allow the entire panel-type television to stably stand vertically from the floor. Therefore, even if a display screen portion of the panel-type television is designed so as to become thinner, when the panel-type television is to be packed, a package to be used for packaging of the panel-type television is required to have an additional space corresponding to the depth of the stands. Therefore, when the panel-type television is packed in such a package, an unnecessary space is produced in the package. In order to avoid such a problem, in some instances, the stands are removed from bodies of the panel-type televisions, packaging of the bodies and packaging of the stands are carried out separately from one another, and they are then shipped. In this case, packages for the stands are required in addition to packages for the bodies.

Japanese Patent Laid-Open No. H8-204348 discloses a legunit for equipment. The legunit comprises two storage recess portions provided at a bottom portion of a body of the equipment, the storage recess portions each having a through-hole formed in a central region of an upper portion thereof, a shaft inserted at an upper end thereof through the through-hole so as to vertically extend and projecting downwardly of the bottomportion of the equipment body, the shaft being provided at the upper end thereof with a stopper, a leg member provided at a lower end of the shaft so as to movable relative to the shaft, a pair of first engaging holes formed in an upper portion of a storage recess portion, the first engaging holes being aligned with each other and spaced apart from each other about the shaft, a pair of second engaging holes formed in the bottom portion of the equipment body, the second engaging holes being aligned with each other and spaced apart from each other about the shaft, a line of the second engaging holes being disposed so as to be cross a line of the first engaging holes, a pair of engaging pins provided on an upper surface of the leg member, the engaging pins being spaced apart from each other about the shaft, and a spring provided between the stopper and the upper portion of the storage recess portion for always causing the shaft provided with the leg member to be urged upwardly. The engaging pins of the leg member are adapted to be operatively engaged with the first engaging hole s formed in the upper portion of the storage recess portion or the second engaging holes formed in the bottom portion of the equipment body. When the engaging pins of the legmember are operatively engaged with the second engaging holes formed in the bottom portion of the equipment, the leg member becomes orthogonal the equipment body, to thereby allow the equipment body to stably stand vertically. Moreover, when the engaging pins of the leg member are operatively engaged with the first engaging holes formed in the storage recess portion, the leg member is accommodated in the storage recess portion.

In the leg unit for the equipment, which is disclosed in the Japanese Patent Laid-Open No. H8-204348, the leg member is rotatable in both a right direction and a left direction relative to the shaft. Even if the leg member is rotated in either of the directions relative to the shaft, the leg member can be accommodated in the storage recess portion of the equipment body. Therefore, a forward portion and a rearward portion of the leg member about the shaft are required to have the same length.

The rearward portion of the leg member which is essentially unnecessary must be designed so as to have the same length as the forward portion of the leg member. Moreover, when the equipment body is in vertically standing conditions, the leg member is fixed by only the engagement between the engaging pins and the second engaging holes, so that fixing strength of the leg member is not enough and there is a possibility that the leg member will be unnecessarily rotated by any accidental factor.

It is an object of the present invention to disclose a panel-type television, which can facilitate educing of a useless space in a package at the time of packaging of the television and in which fixing strength of leg members of the television is reinforced.
The above and further objects of the invention are achieved by a panel-type television according to claim 1. Preferred embodiments are claimed in the dependent claims.

One aspect of the present invention provides a panel-type television comprising: a display panel adapted to display an image through a screen thereof; a frame member supporting the display panel and surrounding a peripheral portion of the display panel; a pair of left and right vertically extending reinforcement frames arranged at a back side of the display panel with upper and lower ends thereof fixed to the display panel and laterally spaced apart from each other for reinforcing the frame member in a vertical direction; a pair of left and right stands for allowing the display panel to be supported therethrough so as to stand vertically with the screen of the display panel facing a front side; the left and right stands being releasably fastened to regions of the reinforcement frames that are adjacent to the lower end portions of the reinforcement frames; protrusions projecting from sides of the stands, perpendicular to the stands; guide members for defining mounting positions of the stands and guiding the stands to mounting directions; the guide members positioned at the regions of the reinforcement frames that are adj acent to the lower end portions of the reinforcement frames; the guide members provided with guide structures; the guide structures including horizontally extending through-slots for guiding the stands in rotational directions while being engaged with the protrusions, and vertically extending through-slots continuously extending vertically from terminals of the horizontally extending through-slots for guiding the stands vertically while being engaged with the protrusions; and a storage space provided at a lower portion of the panel-type television, wherein when the protrusions are located at terminals of the horizontally extending through-slots that are not connected to the vertically extending through-slots, the stands can cause the panel-type television to stand vertically and, when the protrusions are located at upper terminals of the vertically extending through-slots, the stands can be allowed to be accommodated in the storage space.

In short, when the panel-type television is in a vertically standing condition, the protrusions are located at the terminals of the horizontally extending through-slots which are not connected to the vertically extending through-slots. When the stands are to be stored, the stands are rotated such that the protrusions are guided to the terminals of the horizontally extending through-slots which are connected to the vertically extending through-slots. When the stands are pushed upward to thereby cause the protrusions to arrive at the upper terminals of the vertically extending through-slots while being guided along the vertically extending through-slots, the stands are accommodated in the storage space.

As discussed above, accordingto the present invention, the stands can be stored, thus making it possible to use a smaller package for packaging of the panel-type television and contribute to considerable reduction of the cost of material of the package. Moreover, a smaller package can be used for packaging of the panel-type television, so that it is possible to increase the number of packages having the panel-type televisions contained therein and housed in a transport container, resulting in considerable reduction of the transportation cost of the panel-type televisions. In addition, it is possible to mount the panel-type television of the present invention onto a wall without removing the stands from a television body. Moreover, rotational directions of the shafts of the stands are restricted, so that forward regions and rearward regions of the stands about the shafts are not required to have the same lengths.

An optional aspect of the present invention provides a panel-type television, wherein the guide structures comprise a plurality of vertically spaced apart horizontally extending through-slots that are vertically offset relative to the first horizontally extending through-slots.
In this case, the plurality of horizontally extending through-slots are disposed so as to be vertically spaced apart from one another, thus making it possible to adjust the heights of the stands.

Another optional aspect of the present invention provides a panel-type television, wherein the guide structure comprises a first guide structure for guiding the right stand and a second guide structure for guiding the left stand, the first guide structure and the second guide structure being symmetric relative to each other.
In this case, the first guide structure for guiding the right stand and the second guide structure for guiding the left stand are different from each other in construction, so that there is not possibility that the right guide member and the left guide member are mounted vice versa. Therefore, operability in production of the panel-type television can be improved.

Another optional aspect of the present invention provides a panel-type television, wherein the guide structure comprises a first guide structure for guiding the right stand and a second guide structure for guiding the left stand, the first and second guide structure being provided at each of the guide members and vertically spaced apart from each other.
In this case, the first guide structure for guiding the right stand and the second guide structure for guiding the left stand are provided at the same guide members, so that the same guide members can be attached to the right and left vertically extending reinforcement frames. This makes it possible to reduce the production cost.

These and other objects and many of the attendant advantages of the present invention will be readily appreciated as the same becomes better understood by reference to the following detailed description when considered in connection with the accompanying drawings.
Fig. 1 is a schematic perspective view of a panel-type television according to the present invention, as viewed from an oblique front side;
Fig. 2 is a schematic perspective view of the panel-type television, as viewed from an oblique rear side;
Fig. 3 is a schematic perspective view of the panel-type television as viewed from the oblique rear side, in which a cabinet is removed;
Fig. 4 is a block diagram exhibiting an electrical structure of the panel-type television according to the present invention;
Fig. 5 is a schematic perspective view which is of assistance in explaining a positional relation among reinforcement frames, guide members, and stands, when the panel-type television is in a vertically standing condition;
Fig. 6 is a schematic perspective view which is of assistance in explaining a positional relation among the reinforcement frames, the guide members, and the stands, when the stands are in laterally oriented conditions;
Fig. 7 is a schematic perspective view which is of assistance in explaining a positional relation among the reinforcement frames, the guide members, and the stands, when the stands are in accommodated conditions;
Fig. 8 is a schematic perspective view of a first modification of the example shown in Figs. 5 to 7, which is of assistance in explaining a positional relation among reinforcement frames, guide members, and stands;
Fig. 9 is a schematic perspective view of a second modification of the example shown in Figs. 5 to 7, which is of assistance in explaining a positional relation among reinforcement frames, guide members, and stands; and
Fig. 10 is a schematic perspective view of a third modification of the example shown in Figs. 5 to 7, which is of assistance in explaining a positional relation among reinforcement frames, guide members, and stands.

Embodiments of the present invention will be discussed in the following order.
(1) Structure of a plasma television according to an embodiment of the present invention;
(2) Stand storage structure;
(3) First modification of the stand storage structure;
(4) Second modification of the stand storage structure;
(5) Third modification of the stand storage structure; and
(6) Summary.

### (1) Structure of a plasma television according to an embodiment of the present invention:

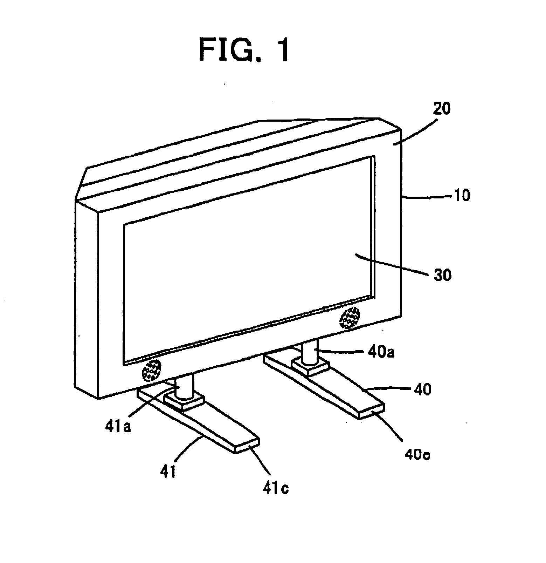

Fig. 1 is a schematic perspective view of a panel-type television (plasma television) 10 employing a plasma display panel (PDP) module (display panel), as viewed from an oblique front side. In the illustrated example, a cabinet 20 has a thin body which is formed into a substantially rectangular shape laterally elongated. The cabinet 20 comprises a front cabinet member having an opening of a substantially rectangular shape for allowing a display surface of the PDP module 30 to be exposed therethrough, and a rear cabinet member combined with the front cabinet member from a back of the front cabinet member.

The panel-type television 10 is supported as a whole by a right stand 40 and a left stand 41 which are projected downward from an interior of the cabinet 20, whereby the panel-type television 10 can stand vertically from a floor. The right stand 40 comprises a right base portion 40c which comes in contact with a floor surface, and a right cylindrical shaft 40a extending substantially vertically from the right base portion 40c. Similarly, the left stand 41 comprises a left base portion 41c which comes in contact with the floor surface, and a left cylindrical shaft 41a extending substantially vertically from the left base portion 41c. The cabinet 20 is formed in left and right regions of a lower end portion of a front surface thereof with openings for an unshown speaker which allow audio outputted from the speaker to be outputted forwardly of the panel-type television 10.

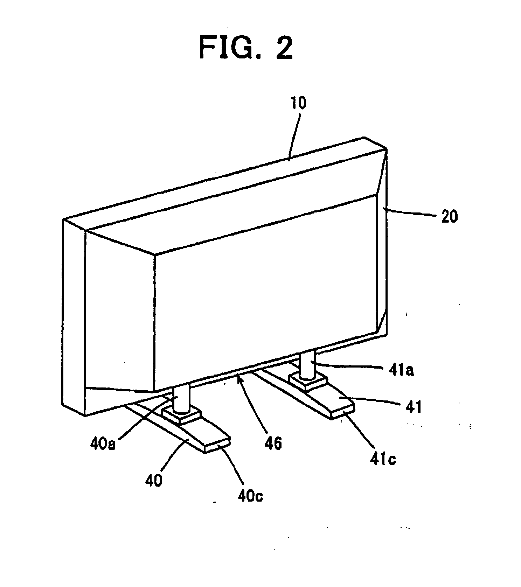

Fig. 2 is a schematicperspectiveviewof thepanel-type television 10 as viewed from an oblique rear side. As shown in Fig. 2, the cabinet 20 is formed in such a manner that a rear portion thereof becomes thick. However, under the rear portion of the cabinet 2 0, there is provided a storage space 4 6 for allowing the right base portion 40c and the left base portion 41c to be stored therein. Moreover, circular insertion openings (not shown) for allowing the right shaft 40a and the left shaft 41a to be rotated are formed in regions of a lower surface of the rear portion of the cabinet 20 through which the right shaft 40a and the left shaft 41a project downward from the interior of the cabinet 20.

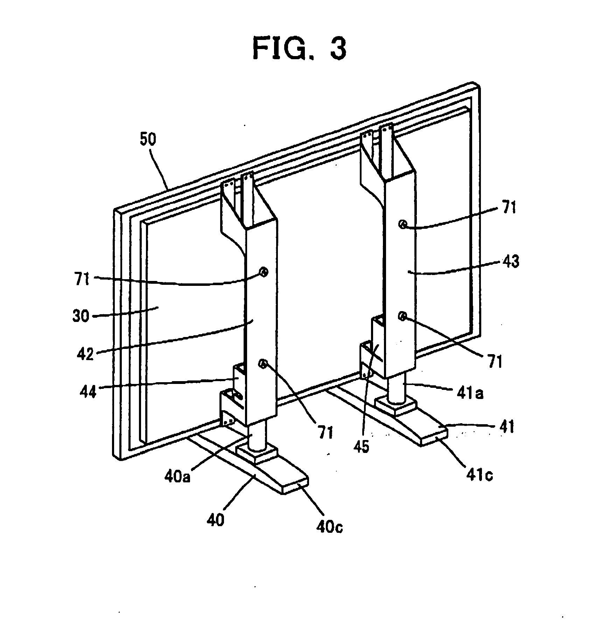

Fig. 3 is a schematic perspective view of the panel-type television 10 as viewed from the oblique rear side, in which the cabinet 20 is removed. As shown in Fig. 3, a frame member 50 is fixed to the PDP module 30 so as to surround upper, lower, left and right sides of the PDP module 30. Two reinforcement frames, i.e., a right vertically extending reinforcement frame 42 and a left vertically extending reinforcement frame 43 are arranged at a back side of the PDP module 30 so as to be laterally spaced apart from each other, with upper and lower ends thereof being screw-fastened to the frame member 50, whereby the frame member 50 is reinforced. Thus, a peripheral step portion (not shown) of the frame member 50 which projects toward a front surface of the PDP module 30 supports the PDP module 30 from a front side, and the right reinforcement frame 42 and the left reinforcement frame 43 support the PDP module 30 from a rear side, whereby the PDP module 30 is held by the frame member 50 and the right and left reinforcement frames 42, 43.

The two reinforcement frames 42, 43 are formed by causing longitudinal metal plates to be bent in a width direction. More particularly, the right reinforcement frame 42 and the left reinforcement frame 43 includes lower bent end portions and upper bent end portions which are each formed into a substantially U-shape in cross-section. Right and left U-shaped guide members 44, 45 are mounted on inner surface regions of the reinforcement frames 42, 43 which are adjacent to the lower bent portions. The right guide member 44 serves to define a mounting position of the right stand 40 and guide the right stand 40 to a first mounting direction. Similarly, the left guide member 45 serves to define a mounting position of the left stand 41 and guide the left shaft 41 to a second mounting direction.

Moreover, each reinforcement frame is formed with two holes which serve as a wall-mounting structure 71 for allowing the panel-type television 10 to be mounted on a wall. When the panel-type television 10 is to be used as a wall-mounted type television, wall-mounting kits are to be attached to the wall-mounting structures 71.

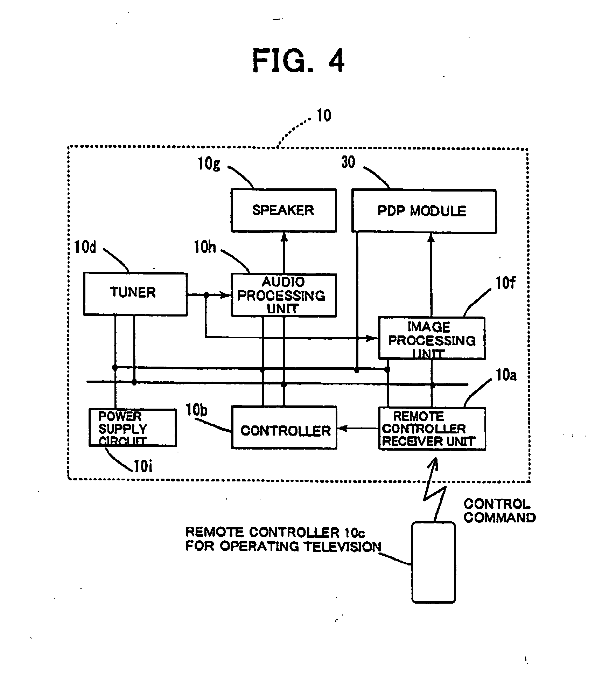

Fig. 4 is a block diagram exhibiting an electrical structure of the panel-type television 10. In the illustrated example, the electrical structure of the panel-type television 10 includes a controller 10b for controlling the operation of a body of the panel-type television 10, a tuner 10d for extracting a television broadcast signal of a selected channel from broadcast signals received through an unshown antenna and outputting the television broadcast signal, an image processing unit 10f for causing an image based on the television broadcast signal outputted from the tuner 10d to be displayed on the PDP module 30, an audio processing unit 10h for causing audio based on the television broadcast signal outputted from the tuner 10d to be outputted from a speaker 10g, and a remote controller receiver unit 10a for receiving a control command transmitted from a remote controller 10c.

The controller 10b, the tuner 10d, the image processing unit 10f, the audio processing unit 10h, and the remote controller receiver unit 10a are mounted, as circuits, on a main substrate which is attached to the back face of the PDP module 30.

The controller 10b is designed so as to control turning on/off of a power source, switching of channels, volume up/down, etc., according to the control command received through the remote controller receiver unit 10a. Incidentally, operation power is adapted to be supplied to respective sections of the panel-type television 10 (the remote controller receiver unit 10a, the controller 10b, the tuner 10d, the image processing unit 10f, the audio processing unit 10h, the PDP 30, etc.) from a power source circuit 10i. This power source circuit 10i is designed so as to receive commercial power (for example, AC 100V) at a primary side thereof, convert the inputted voltage into predetermined voltage via a transformer and output the predetermined voltage to a secondary side thereof.

Incidentally, while the present invention is discussed with taking, as an example, the plasma television in which the image is adapted to be output from the plasma display, the panel-type television according to the present invention may include a liquid crystal television in which an image is adapted to be outputted from a liquid crystal panel.

### (2) Stand Storage Structure:

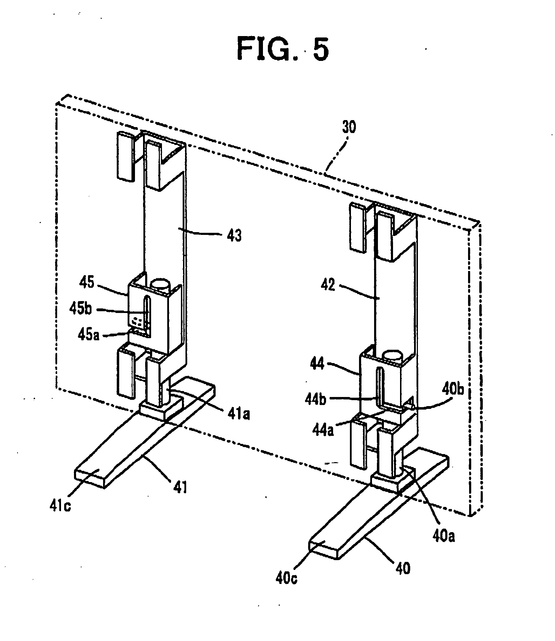

Figs. 5, 6 and 7 are each a schematic perspective view which is of assistance in explaining a positional relation between the right reinforcement frame 42 and the left reinforcement frame 43, a positional relation between the right guide member 44 and the left guide member 45, and a positional relation between the right stand 40 and the left stand 41. In order to facilitate understanding of the positional relations, the PDP module 30 is shown in Figs. 5, 6 and 7 by broken lines.

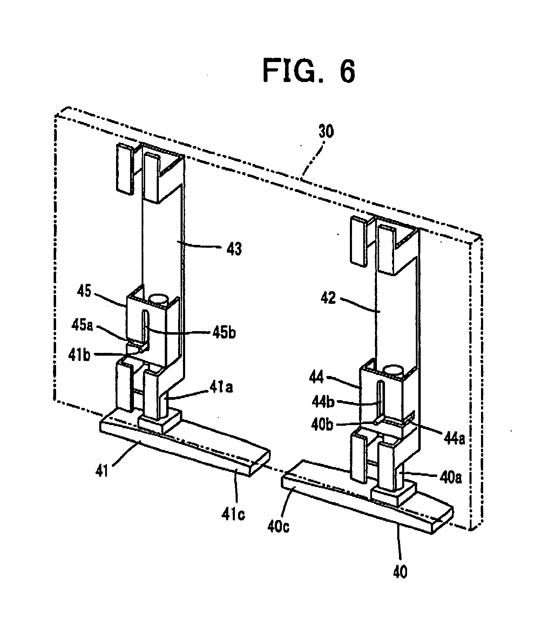

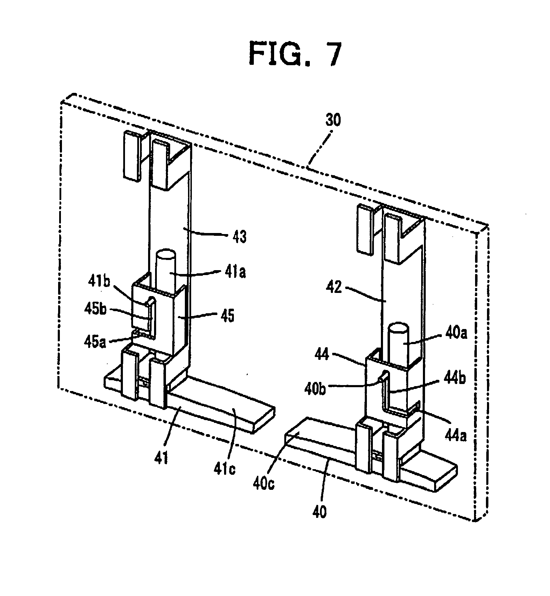

Fig. 5 illustrates the plasma television 10 which is in a vertically standing condition. Fig. 6 illustrates the plasma television as viewed from an upper side, in which in order to accommodate the right stand 40 and the left stand 41, the right stand 40 is in a condition where the shaft thereof is rotated through an angle of 90 degrees in a right direction, and the left stand 41 is in a condition where the shaft thereof is rotated through an angle of 90 degrees in a left direction. Fig. 7 illustrates a condition where the right stand 40 and the left stand 41 are accommodated in the storage space 46 of the cabinet 20 (see Fig. 2).

As discussed above, the right guide member 44 and the left guide member 45 are mounted on the inner surface region of the right reinforcement frame 42 which is adjacent to the lower bent portion of the right reinforcement frame 42, and the inner surface region of the left reinforcement frame 43 which is adjacent to the lower bend portion of the left reinforcement frame 43, respectively. Each of the right guide member 44 and the left guide member 45 is formed from a metal plate and shaped by bending both end portions of the metal plate. More particularly, each of the right and left guide members 44, 45 has a substantially U-shaped body in cross-section which comprises spaced apart side portions and an intermediate portion interconnecting the spaced part sides. Ends of the spaced apart side portions of the right guide member 44 and ends of the spaced apart side portions of the left guide member 45 are attached to the right reinforcement frame 42 and the left reinforcement frame 43, respectively.

A right vertically extending through-slot 44b and a left vertically extending through-slot 45b are formed in a substantially central region of the intermediate portion of the right guide member 44 in a lateral direction, and a substantially central region of the intermediate portion of the left guide member 45 in the lateral direction, respectively. The right vertically extending through-slot 44b and the left vertically extending through-slot 45b are formed in a vertical portion of the intermediate portion of the right guide member 44 which is spaced at predetermined distances from upper and lower ends of the intermediate portion of the right guide member 44, and a region of the intermediate portion of the left guide member 45 which is spaced at predetermined distances from upper and lower ends of the intermediate portion of the left guide member 45, respectively, so that a right region and a left region of each of the right guide member 44 and the left guide member 45 are connected to each other at the upper and lower ends thereof without being separated by the corresponding vertically extending through-slot.

The right guide member 44 further has a right horizontally extending through-slot 44a formed therein so as to substantially horizontally extend in a right direction from a lower terminal of the right vertically extending through-slot 44b. Similarly, the left guide member 45 further has a left horizontally extending through-slot 45a formed therein so as to substantially horizontally extend in a left direction from a lower terminal of the left vertically extending through-slot 45b. More particularly, the right horizontally extending through-slot 44a extends from the lower terminal of the right vertically extending through-slot 44b to a region of a right side portion of the right guide member 44 which is spaced at a predetermined distance from an end of the right side portion of the right guide member 44. Similarly, the left horizontally extending through-slot 45a extends from the lower terminal of the left vertically extending through-slot 45b to a region of a left side portion of the left guide member 45 which is spaced at a predetermined distance from an end of the left side portion of the left guide member 45.

Thus, the right horizontally extending through-slot 44a and the right vertically extending through-slot 44b constitute a guide structure in the right guide member 44, and the left horizontally extending through-slot 45a and the left vertically extending through-slot 45b also constitute a guide structure in the left guide member 45.

In a structure of the right stand 40, the right cylindrical shaft 40a is connected to the right base portion 40c so as to be substantially perpendicular to the right base portion 40c, and a forward region of the right base portion 40c which occupies an area in the front of the right shaft 40a is longer than a rearward region of the right base portion 40c which occupies an area in the rear of the right shaft 40a. Similarly, in a structure of the left stand 41, the left cylindrical shaft 41a is connected to the left base portion 41c so as to be substantially perpendicular to the left base portion 41c, and a forward region of the left base portion 41c which occupies an area in the front of the left shaft 41a is longer than a rearward region of the left base portion 41c which occupies an area in the rear of the left shaft 41a.

The right shaft 40a and the left shaft 41a are inserted from a downward direction into a space between the right reinforcement frame 42 and the right guide member 44, and a space between the left reinforcement frame 43 and the left guide member 45, respectively. After the insertion, a right threaded bolt 40b is inserted through the right horizontally extending through-slot 44a or the right vertically extending through-slot 44b and then fastened into a side of the right shaft 40a with an outer end portion of the right bolt 40b being projected from the right horizontally extending through-slot 44a or the right vertically extending through-slot 44b so as to be substantially perpendicular to the right shaft 40a. Similarly, a left threaded bolt 41b is inserted through the left horizontally extending through-slot 45a or the left vertically extending through-slot 45b and then fastened into a side of the left shaft 41a with an outer portion of the left bolt 41b being projected from the left horizontally extending through-slot 45a or the left vertically extending through-slot 45b so as to be substantially perpendicular to the side of the left shaft 41a. The right bolt 40b and the left bolt 41b constitute a protrusion projecting from the side of the right stand 40 and a protrusion projecting from the side of the left stand 41, respectively.

When the plasma television 10 vertically stands, and the right base portion 40c and the left base portion 41c are oriented so as to be cross the cabinet 20 as shown in Figs. 1 and 2, the right bolt 40b is located at a right terminal of the right horizontally extending through-slot 44a which is situated at the region of the right side portion of the right guide member 44 which is adjacent to the end of the right side portion of the right guide member 44, and the left bolt 41b is located at a left terminal of the left horizontally extending through-slot 45a which is situated at the region of the left side portion of the left guide member 45 which is adjacent to the end of the left side portion of the left guide member 45, as shown in Fig. 5.

The right stand 40 is screw-fastened to the right reinforcement frame 42 by causing a screw to be inserted from a threaded hole (not shown) formed in the right reinforcement frame 42 into a threaded hole (not shown) formed in a predetermined portion of the right shaft 40a. Similarly, the left stand 41 is screw-fastened to the left reinforcement frame 43 by causing a screw to be inserted from a threaded hole (not shown) formed in the left reinforcement frame 43 into a threaded hole (not shown) formed in a predetermined portion of the left shaft 41a.

When the right stand 40 and the left stand 41 are to be accommodated into the storage space 46 (Fig. 2), the screws which have caused the right shaft 40a and the left shaft 41a to be fixed to the right reinforcement frame 42 and the left reinforcement frame 43, respectively, are loosened and then removed. Then, the right shaft 40a is rotated in the right direction as viewed from the upper side in such a manner to allow the right bolt 40b to be guided along the right horizontally extending through-slot 44a. Similarly, the left shaft 41a is rotated in the left direction as viewed from the upper side in such a manner to allow the left bolt 41b to be guided along the left horizontally extending through-slot 45a.

Thus, when the right bolt 40b arrives at a left terminal of the right horizontally extending through-slot 44a and the left bolt 41b arrives at a right terminal of the left horizontally extending through-slot 45a as shown in Fig. 6, the forward region of the right base portion 40c and the rearward region of the right base portion 40c are oriented so as to be located on the left side and on the right side, respectively, and the forward region of the left base portion 41c and the rearward region of the left base portion 41c are oriented so as to be located on the right side and on the left side, respectively.

Then, the right stand 40 is pushed upwardly in such a manner to allow the right bolt 40b to be guided upward along the right vertically extending through-slot 44b. Similarly, the left stand 41 is pushed upwardly in such a manner to allow the left bolt 41b to be guided upward along the left vertically extending through-slot 45b. When the right bolt 40b arrives at an upper terminal of the right vertically extending through-slot 44b and the leftbolt 41b arrives at an upper terminal of the left vertically extending through-slot 45b as shown in Fig. 7, the right base portion 40c of the right stand 40 and the left base portion 41c of the left stand 41 are accommodated into the storage space 46 (Fig. 2) which is provided under the rear portion of the cabinet 20.

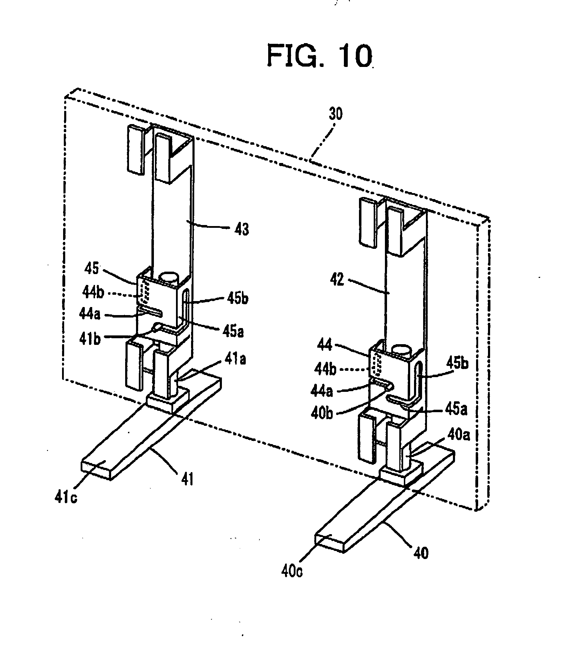

While the right guide member 44 is formed as a member separate from the right reinforcement frame 42 and the left guide member 45 is formed as a member separate from the left reinforcement frame 43 in the illustrated example, the right guide member 44 and the right reinforcement frame 42 may be formed as a one piece member and the left guide member 45 and the left reinforcement frame 43 may be formed as a one piece member, when they are produced.
Moreover, while the right guide member 44 and the left guide member 45 are symmetric relative to each other in the illustrated example, they may not be symmetric relative to each other as in a third modification which will be discussed hereinafter with reference to Fig. 10.

### (3) First modification of the stand storage structure:

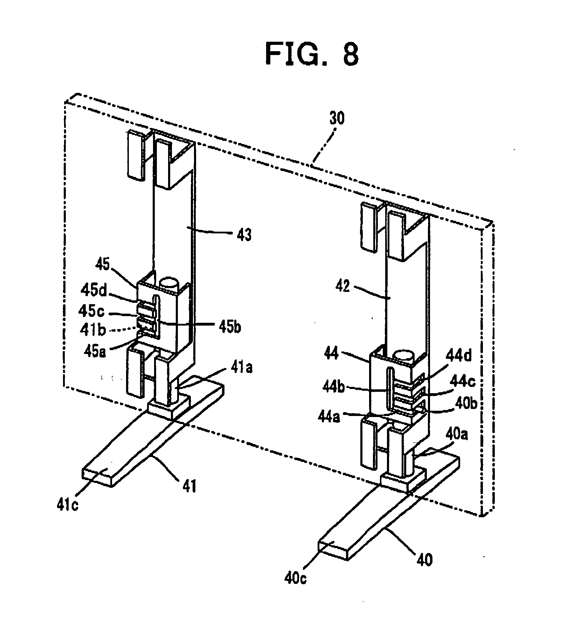

Fig. 8 is a schematic perspective view illustrating a first modification of the stand storage structure shown in Figs. 5 to 7. In the illustrate example, the right guide member 44 has a second right horizontally extending through-slot 44c and a third right horizontally extending through-slot 44d which communicate with the right vertically extending through-slot 44b and are formed in portions of the right guide member 44 which are offset upward relative to the first right horizontally extending through-slot 44a. Similarly, the left guide member 45 has a second left horizontally extending through-slot 45c and a third left horizontally extending through-slot 45d which communicate with the left vertically extending through-slot 45b and are formed in portions of the left guide member 45 which are offset upward relative to the first left horizontally extending through-slot 45a. The second horizontally extending through-slots 44c, 45c and the third horizontally extending through-slots 44d, 45d are to be used for positioning the right and left stands 40, 41 when the heights of the right and left stands 40, 41 are to be changed.

Thus, the second right horizontally extending through-slot 44c and the third right horizontally extending through-slot 44d constitute a plurality of horizontally extending through-slots which are formed in the portions of the right guide member 44 which are offset upward relative to the right horizontally extending through-slot 44a. Similarly, the second left horizontally extending through-slot 45c and the third left horizontally extending through-slot 45d constitute a plurality of horizontally extending through-slots which are formed in the portion of the left guide member 45 which are offset upward relative to the left horizontally extending through-slot 45a.

In short, when the display screen of the plasma television 10 is at an upper location, the screw which has caused the right shaft 40a to be fixed to the right reinforcement frame 42 is loosened and then removed, and the screw which has caused the left shaft 41a to be fixed to the left reinforcement frame 43 is loosened and then removed. Then, the right bolt 40b is moved to the left terminal of the right horizontally extending through-slot 44a along the right horizontally extending through-slot 44a by causing the right shaft 40a to be rotated in the right direction as viewed from the upper side. Similarly, the left bolt 41b is moved to the right terminal of the left horizontally extending through-slot 45a along the left horizontally extending through-slot 45aby causing the left shaft 41a to be rotated in the left direction as viewed from the upper side.

Then, the right shaft 40a is pushed upward in such a manner to allow the right bolt 40b to be guided along the right vertically extending through-slot 44b, and is then rotated in the left direction as viewed from the upper side in such a manner to allow the right bolt 40b to be moved to a right terminal of the second right horizontally extending through-slot 44c along the second right horizontally extending through-slot 44c. Similarly, the left shaft 41a is pushed upward in such a manner to allow the left bolt 41b to be guided along the left vertically extending through-slot 45b, and is then rotated in the right direction as viewed from the upper side in such a manner to allow the left bolt 41b to be moved to a left terminal of the second left horizontally extending through-slot 45c along the second left horizontally extending through-slot 45c.

Thereafter, the respective shafts are screw-fastened to the corresponding reinforcement frames. When the display screen of the plasma television 10 is still at an upper location, the right bolt 40b is moved to a right terminal of the third right horizontally extending through-slot 44d in the same manner as discussed above and, thereafter, the right shaft 40a is screw-fastened to the right reinforcement frame 42. Similarly, the left bolt 41b is moved to a left terminal of the third left horizontally extending through-slot 45d and, thereafter, the left shaft 41a is screw-fastened to the left reinforcement frame 43.

### (4) Second modification of the stand storage structure:

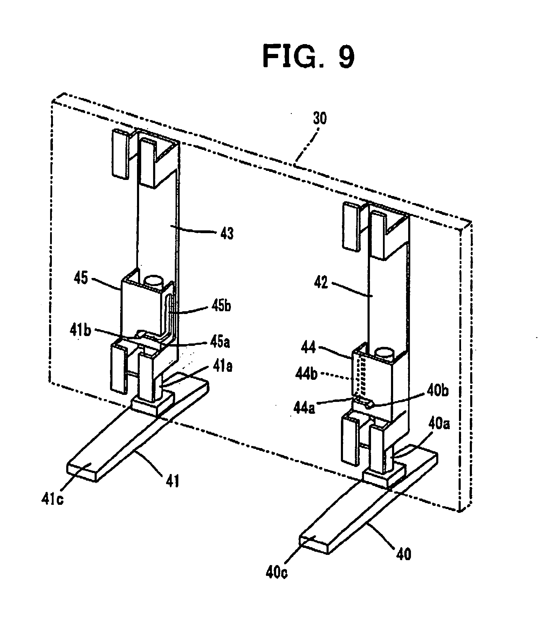

Fig. 9 is a schematic perspective view illustrating a second modification of the stand storage structure shown in Figs. 5 to 7. In this illustrated example, the right horizontally extending through-slot 44a is formed in the right guide member 44 so as to horizontally extend from a region of the intermediate portion of the right guide member 44 which is a substantially central region adj acent to a lower end of the intermediate portion of the right guide member 44, to a region of a left side portion of the right guide member 44 which is adjacent to an end of the left side portion of the right guide member 44. Moreover, the right vertically extending through- slot 44b is formed in the left side portion of the right guide member 44 so as to extend upward from a left terminal of the right horizontally extending through-slot 44a and terminate at a portion of the left side portion of the right guide member 44 which is adjacent to an upper end of the left side of the right guide member 44.

Similarly, the left horizontally extending through-slot 45a is formed in the left guide member 45 so as to horizontally extend from a region of the intermediate portion of the left guide member 45 which is a substantially central region adjacent to a lower end of the intermediate portion of the left guide member 45, to a region of a right side portion of the left guide member 45 which is adjacent to an end of the right side portion of the left guide member 45. Moreover, the left vertically extending through-slot 45b is formed in the right side portion of the left guide member 45 so as to extend upward from a right terminal of the left horizontally extending through-slot 45a and terminate at a region of the right side portion of the left guide member 45 which is adjacent to an upper end of the right side portion of the left guide member 45.

When the base portions of the stands 40, 41 are oriented so as to be cross the cabinet of the panel-type television, the right bolt 40b is located at the right terminal of the right horizontally extending through-slot 44a and the left bolt is located at the left terminal of the left horizontally extending through-slot 45a. Moreover, when the base portions of the stands 40, 41 are oriented laterally and accommodated in the storage space under the rear portion of the cabinet, the right bolt 40b is located at an upper terminal of the right vertically extending through-slot 44b and the left bolt 41b is located at an upper terminal of the left vertically extending through-slot 45b.

In short, when the stands 40, 41 of the plasma television 10 are to be accommodated into the storage space, the screws which have caused the right and left shafts 40a, 41a to be fastened to the right reinforcement frame 42 and the left reinforcement frame 43 are loosened and then removed. Then, the right shaft 40a is rotated in the right direction as viewed from the upper side in such a manner to allow the right bolt 40b to be moved to the left terminal of the right horizontally extending through-slot 44a along the right horizontally extending through-slot 44a. Similarly, the left shaft 41a is rotated in the left direction as viewed from the upper side in such a manner to allow the left bolt 41b to be moved to the right terminal of the left horizontally extending through-slot 45a along the left horizontally extending through-slot 45a.

Then, the right shaft 40a is pushed upward in such a manner to allow the right bolt 40b to be moved to an upper terminal of the right vertically extending through-slot 44b along the right vertically extending through-slot 44b. Similarly, the left shaft 41a is pushed upward in such a manner to allow the left bolt 41b to be moved to an upper terminal of the left vertically extending through-slot 45b along the left vertically extending through-slot 45b. Thereafter, the right shaft 40a and the left shaft 41a are screw-fastened to the right reinforcement frame 42 and the left reinforcement frame 43, respectively.

### (5) Third modification of the stand storage structure:

Fig. 10 is a schematic perspective view illustrating a third modification of the stand storage structure shown in Figs. 5 to 7. In this illustrated example, the right guide member 44 and the left guide member 45 have the same shape. That is, the right guide member 44 and the left guide member 45 are formed with the right horizontally extending through-slots 44a, the left horizontally extending through-slots 45a, the right vertically extending through-slots 44b, and the left vertically extending through-slots 45b.

The left horizontally extending through-slots 45a are formed in the right and left guide members 44, 45 so as to horizontally extend in the right direction from the regions of the guide members 44, 45 which are the substantially central regions adjacent to the lower ends of the intermediate portions of the guide members 44, 45, and terminate at the regions of the right side portions of the guide members 44, 45 which are adjacent to the ends of the right side portions of the guide members 44, 45. Moreover, the left vertically extending through-slots 45b extend upward from right terminals of the left horizontally extending through-slots 45a and terminate at regions of the right side portions of the guide member 44, 45 which are adjacent to the upper ends of the right side portions of the guide members 44, 45.

The right horizontally extending through-slots 44a are formed in the right and left guide members 44, 45 so as to horizontally extend in the left direction from the regions of the guide members 44, 45 which are the substantially central regions adjacent to the lower ends of the intermediate portions of the guide members 44, 45, and terminate at the regions of the left side portions of the guide members 44, 45 which are adjacent to the ends of the left side portions of the guide members 44, 45. Moreover, the right vertically extending through-slots 44b extend upward from left terminals of the right horizontally extending through-slots 44a and terminate at regions of the left side portions of the guide member 44, 45 which are adjacent to the upper ends of the left side portions of the guide members 44, 45.

The right horizontally extending through-slots 44a and the left horizontally extending through-slots 45a are vertically offset relative to each other, so that they do not cross each other. In the example illustrated in Fig. 10, the right vertically extending through-slots 44a are formed in regions of the guide members 44, 45 which are upper than regions of the guide members 44, 45 in which the left vertically extending through-slots 45a are formed. In the right guide member 44 which is attached to the right reinforcement frame 42, the right bolt 40b is received in a through-slot which is comprised of the right horizontally extending through-slot 44a and the right vertically extending through-slot 44b. In the left guide member 45 which is attached to the left reinforcement frame 43, the left bolt 41b is received in a through-slot which is comprised of the left horizontally extending through-slot 45a and the left vertically extending through-slot 45b.

Therefore, in the third example, the mounting height of the right bolt 40b attached to the right stand 40 and the mounting height of the left bolt 41b attached to the left stand 41 are different from each other by distances corresponding to distances in which the right horizontally extending through-slots 44a and the left horizontally extending through-slots 45a are vertically offset relative to each other.

When the base portions 40c, 41c are oriented so as to be cross the cabinet, the right bolt 40b is located at the right terminal of the right horizontally extending through-slot 44a and the left bolt 41b is located at the left terminal of the left horizontally extending through-slot 45a. Moreover, when the base portions 40c, 41c are oriented laterally and accommodated in the storage space 46 (Fig. 2) under the rear portion of the cabinet, the right bolt 40b is located at the upper terminal of the right vertically extending through-slot 44b and the left bolt 41b is located at the upper terminal of the left vertically extending through-slot 45b.

In short, in the third example, when the stands 40, 41 of the plasma television 10 are to be accommodated in the storage space, the screws which have caused the right shaft 40a and the left shaft 41a to be fastened to the right reinforcement frame 42 and the left reinforcement frame 43 are loosened and then removed. Then, the right bolt 40b is moved to the left terminal of the right horizontally extending through-slot 44a along the right horizontally extending through-slot 44a by causing the right shaft 40a to be rotated in the right direction as viewed from the upper side. Similarly, the left bolt 41b is moved to the right terminal of the left horizontally extending through-slot 45a along the left horizontally extending through-slot 45a by causing the left shaft 41a to be rotated in the left direction as viewed from the upper side.

Then, the right shaft 40a is pushed upward in such a manner to allow the right bolt 40b to be moved to the upper terminal of the right vertically extending through-slot 44b along the right vertically extending through-slot 44b. Similarly, the left shaft 41a is pushed upward in such a manner to allow the left bolt 41b to be moved to the upper terminal of the left vertically extending through-slot 45b along the left vertically extending through-slot 45b. Thereafter, the right shaft 40a and the left shaft 41a are screw-fastened to the right reinforcement frame 42 and the left reinforcement frame 43, respectively.

### (6) Summary:

In short, when the panel-type television is in a vertically standing condition, the respective bolts 40b, 41b are located at terminals of the horizontally extending through-slots 44a, 45a which are not connected to the vertically extending through-slots 44b, 45b. When the stands 40, 41 are to be accommodated in the storage space, the shafts of the stands 40, 41 are rotated so as to allow the bolts 40b, 41b to be guided along the horizontally extending through-slots 44a, 45a to the terminals of the horizontally extending through-slots 44a, 45a which are connected to the vertically extending through-slots 44b, 45b. Then, the stands 40, 41 are pushed upward so as to allow the bolts 40b, 41b to be moved to the upper terminals of the vertically extending through-slots 44b, 45b while being guided along the vertically extending through-slots 44b, 45b, whereby the stands 40, 41 are accommodated in the storage space.

## Claims

1. A panel-type television comprising:
a display panel (30) adapted to display an image through a screen thereof;
a frame member (50) supporting the display panel (30) and surrounding a peripheral portion of the display panel (30);
a pair of left and right stands (41, 40) for allowing the display panel (30) to be supported therethrough so as to stand vertically with the screen of the display panel (30) facing a front side;
guide members (45, 44) for defining mounting positions of the stands (41, 40) and guiding the stands (41, 40) to mounting directions;
the guide members (45, 44) provided with guide structures; and
a storage space provided at a lower portion of the panel-type television (10),
**characterized in that**
the panel-type television further comprises:
a pair of left and right vertically extending reinforcement frames (43, 42) arranged at a back side of the display panel (30) with upper and lower ends thereof fixed to the display panel (30) and laterally spaced apart from each other for reinforcing the frame member (50) in a vertical direction;
the left and right stands (41, 40) being releasably fastened to regions of the reinforcement frames (43, 42) that are adjacent to the lower end portions of the reinforcement frames (43, 42);
protrusions (41 b, 40b) projecting from sides of the stands, perpendicular to the stands (43, 42);
the guide members (45, 44) positioned at the regions of the reinforcement frames (43, 42) that are adjacent to the lower end portions of the reinforcement frames (43, 42);
the guide structures including horizontally extending through-slots (45a, 44a) for guiding the stands (41, 40) in rotational directions while being engaged with the protrusions (41 b, 40b), and vertically extending through-slots (45b, 44b) continuously extending vertically from terminals of the horizontally extending through-slots (45a, 44a) for guiding the stands (41, 40) vertically while being engaged with the protrusions (41b, 40b); and
wherein when the protrusions (41b, 40b) are located at terminals of the horizontally extending through-slots (45a, 44a) that are not connected to the vertically extending through-slots (45b, 44b), the stands (41, 40) can cause the panel-type television (10) to stand vertically and, when the protrusions (41b, 40b) are located at upper terminals of the vertically extending through-slots (45b, 44b), the stands (41, 40) can be allowed to be accommodated in the storage space.

2. A panel-like television according to claim 1, **characterized in that** the panel-type television is a
plasma television:
the display panel (30) is a plasma display panel module (30) for displaying an image through a screen thereof and the plasma television further comprising:
a speaker (10g) for outputting audio;
an antenna for receiving television broadcast signals;
a tuner (10d) for extracting a television broadcast signal of a selected channel from the television broadcast signals received through the antenna, and outputting the television broadcast signals;
an image processing unit (10f) for causing the image to be displayed on the screen of the plasma display panel module (30) on the basis of the television broadcast signals output from the tuner;
an audio processing unit (10h) for causing the speaker to output the audio;
a power source circuit (10i) for converting input voltage of a primary side into predetermined voltage via a transformer and outputting the predetermined voltage at a secondary side;
a cabinet for housing the plasma display panel module (30), the speaker (10g), the tuner (10d), the image processing unit (10f), the audio processing unit (10h), the power source circuit (10i), the frame member (50), the right vertically extending reinforcement frame (42), and the left vertically extending reinforcement frame (43);
the cabinet having two insertion openings formed in a lower surface;
the frame member (50) being mounted on the plasma display panel module (30) so as to surround upper, lower, left and right sides of the plasma display panel module (30) for supporting the plasma display panel module (30) from a front side;
the right and left vertically extending reinforcement frames (42, 43) being made from longitudinal metal plates and shaped by causing upper and lower end portions of the longitudinal metal plates to be bent in a width direction in such a manner that the upper and lower end portions of the longitudinal metal plates are each formed into a substantially U-shape in cross-section;
the right and left vertically extending reinforcement frames (42, 43) configured with holes (71) into which wall-mounting kits are to be mounted;
the pair of left and right stands (41, 40) extending downward from regions of the reinforcement frames that are adjacent to the lower end portions of the left and right vertically extending reinforcement frames (43, 42), and projecting out of the cabinet (20) via the insertion openings of the cabinet (20);
the left and right stands (41, 40) including cylindrical shafts (41a, 40a) releasably screw-fastened to the left and right vertically extending reinforcement frames (43, 42);
the insertion openings being formed so as to have circular shapes that allow the shafts (41 a, 40a) of the left and right stands to be rotated;
the protrusions (41 b, 40b) comprising a right bolt (40b) attached to a side of the right stand (40) and projecting from the right stand (40) so as to be perpendicular to the right stand (40); and
a left bolt (41 b) attached to a side of the left stand (41) and projecting from the left stand (41) so as to be perpendicular to the left stand (41);
the guide members (45, 44) comprising a right guide member (44) for defining a mounting position of the right stand (40) and guiding the right stand (40) to a first mounting direction;
the right guide member (44) being attached to the region of the right vertically extending reinforcement frame (42) that is adjacent to the lower end portion of the right vertically extending reinforcement frame (42);
the right guide member (44) including spaced apart side portions and an intermediate portion interconnecting the spaced apart side portions; and
a left guide member (45) for defining a mounting position of the left stand (40) and guiding the left stand (41) to a mounting direction;
the left guide member (45) being attached to the region of the left vertically extending reinforcement frame (43) that is adjacent to the lower end portion of the left vertically extending reinforcement frame (43);
the left guide member (45) including spaced apart side portions and an intermediate portion interconnecting the spaced apart side portions;
the horizontally extending through-slots (45a, 44a) comprising:
a right horizontally extending through-slot (44a) formed in the right guide member (44) so as to extend horizontally from a region of a right side portion of the right guide member (44) that is adjacent to a lower end of the right side portion of the right guide member (44), to a substantially central region of the intermediate portion of the right guide member (44);
the right bolt (40b) of the right stand (40) operatively engaging with the right horizontally extending through-slot (44a) and guided along the right horizontally extending through-slot (44a) in a rotational direction of the shaft (40a) of the right stand (40) after the shaft (40a) of the right stand (40) is released from the right vertically extending reinforcement frame (42);
the vertically extending through-slots (45b, 44b) comprising:
a right vertically extending through-slot (44b) formed in the right guide member (44) so as to continuously extend vertically from a right terminal of the right horizontally extending through-slot (44a);
the right bolt (40b) of the right stand (40) operatively engaging with the right vertically extending through-slot (44b) and guided vertically along the right vertically extending through-slot (44b) according to vertical movement of the shaft (40a) of the right stand (40) after the shaft (40a) of the right stand (40) is released from the right vertically extending reinforcement frame (42);
the horizontally extending through-slots (45a, 44a) further comprising:
a left horizontally extending through-slot (45a) formed in the left guide member (45) so as to extend horizontally from a region of a left side portion of the left guide member (45) that is adjacent to a lower end of the left side portion of the left guide member (45), to a substantially central region of the intermediate portion of the left guide member (45);
the left bolt (41b) of the left stand (41) operatively engaging with the left horizontally extending through-slot (45a) and guided along the left horizontally extending through-slot (45a) in a rotational direction of the shaft (41 a) of the left stand (41) after the shaft (41 a) of the left stand (41) is released from the left vertically extending reinforcement frame (42); and
the vertically extending through-slots (45b, 44b) further comprising:
a left vertically extending through-slot (45b) formed in the left guide member (45) so as to continuously extend vertically from a right terminal of the left horizontally extending through-slot (45a); and
the left bolt (41 b) of the left stand (41) operatively engaging with the left vertically extending through-slot and guided vertically along the left vertically extending through-slot (45b) according to vertical movement of the shaft (41 a) of the left stand (41) after the shaft (41 a) of the left stand (41) is released from the left vertically extending reinforcement frame (43).

3. A panel-type television according to claim 1, wherein the guide structures comprise a plurality of vertically spaced apart horizontally extending through-slots (45c, 45d, 44c, 44d) that are vertically offset relative to the first horizontally extending through-slots (41 b, 40b).

4. A panel-type television according to claim 1 or 3, wherein the guide structure comprises a first guide structure (44a, 44b) for guiding the right stand (40) and a second guide structure (45a, 45b) for guiding the left stand (41), the first guide structure (44a, 44b) and the second guide structure (45a, 45b) being symmetric relative to each other.

5. A panel-type television according to claim 1 or 3, wherein the guide structure comprises a first guide structure (44a, 44b) for guiding the right stand (40) and a second guide structure (45a, 45b) for guiding the left stand (41), the first and second guide structure (44a, 44b, 45a, 45b) being provided at each of the guide members (44, 45) and vertically spaced apart from each other.

6. A panel-type television according to any one of claims land 3 through 5, wherein each of the stands (41, 40) including a base portion (41c, 40c) and a shaft (41a, 40a) vertically extending from the base portion, the base portion (41 c, 40c) having a forward region and a rearward region about the shaft (41 a, 40a), the forward region of the base portion (41 c, 40c) being longer than the rearward region of the base portion (41 c, 40c).

## Patentansprüche

1. Flachbildschirm-Fernseher, der umfasst:
ein Anzeigefeld (30), das so eingerichtet ist, dass es ein Bild über einen Bildschirm desselben anzeigt;
ein Rahmenelement (50), das das Anzeigefeld (30) trägt und einen Umfangsabschnitt des Anzeigefeldes (30) umgibt;
ein aus einem linken und einem rechten Fuß (41, 40) bestehendes Paar, mit dem das Anzeigefeld (30) so getragen werden kann, dass es vertikal steht und der Bildschirm des Anzeigefeldes (30) einer Vorderseite zugewandt ist;
Führungselemente (45, 44), die Anbringungspositionen der Füße (41, 40) bestimmen und die Füße (41, 40) in Anbringungsrichtungen führen;
wobei die Führungselemente (45, 44) mit Führungsstrukturen versehen sind; und
einen Aufbewahrungsraum, der an einem unteren Abschnitt des Flachbildschirm-Fernsehers (10) vorhanden ist,
**dadurch gekennzeichnet, dass**
der Flachbildschirm-Fernseher des Weiteren umfasst:
ein aus einem linken und rechten sich vertikal erstreckenden Verstärkungsrahmen (43, 42) bestehendes Paar, das an einer Rückseite des Anzeigefeldes (30) angeordnet ist, wobei ein oberes und ein unteres Ende derselben an dem Anzeigefeld (30) befestigt und seitlich voneinander beabstandet sind, um das Rahmenelement (50) in einer vertikalen Richtung zu verstärken;
der linke und der rechte Fuß (41, 40) lösbar an Bereichen der Verstärkungsrahmen (43, 42) befestigt sind, die an die unteren Endabschnitte der Verstärkungsrahmen (43, 44) angrenzen;
Vorsprünge (41 b, 40b), die von Seiten der Füße senkrecht zu den Füßen (43, 42) vorstehen;
die Führungselemente (45, 44) in den Bereichen der Verstärkungsrahmen (43, 42) angeordnet sind, die an die unteren Endabschnitte der Verstärkungsrahmen (43, 42) angrenzen;
die Führungsstrukturen horizontal verlaufende Durchgangsschlitze (45a, 44a), die die Füße (41, 40) in Drehrichtungen führen und dabei mit den Vorsprüngen (41b, 40b) in Eingriff sind, und vertikal verlaufende Durchgangsschlitze (45b, 44b) enthalten, die durchgehend vertikal von Enden der horizontal verlaufenden Durchgangsschlitze (45a, 44a) verlaufen und die Füße (41, 40) vertikal führen und dabei mit den Vorsprüngen (41 b, 40b) in Eingriff sind; und
wobei, wenn sich die Vorsprünge (41b, 40b) an Enden der horizontal verlaufenden Durchgangsschlitze (45a, 44a) befinden, die nicht mit den vertikal verlaufenden Durchgangsschlitzen (45b, 44b) verbunden sind, die Füße (41, 40) bewirken können, dass der Flachbildschirm-Fernseher (10) vertikal steht, und wenn sich die Vorsprünge (41 b, 40b) an oberen Enden der vertikal verlaufenden Durchgangsschlitze (45b, 44b) befinden, die Füße (41, 42) in dem Aufbewahrungsraum aufgenommen werden können.

2. Flachbildschirm-Fernseher nach Anspruch 1, **dadurch gekennzeichnet, dass** der Flachbildschirm-Fernseher ein Plasma-Fernseher ist:
das Anzeigefeld (30) ein Plasmaanzeigefeld-Modul (30) ist, das ein Bild über seinen Bildschirm anzeigt, und der Plasma-Fernseher des Weiteren umfasst:
einen Lautsprecher (10g) zum Ausgeben von Ton;
eine Antenne zum Empfangen von Fernsehsignalen;
einen Tuner (10b) zum Extrahieren eines Fernsehsignals eines ausgewählten Kanals aus den über die Antenne empfangenen Fernsehsignalen, und zum Ausgeben der Fernsehsignale;
eine Bildverarbeitungseinheit (10f), die bewirkt, dass das Bild auf Basis der von dem Tuner ausgegebenen Fernsehsignale auf dem Bildschirm des Plasmaanzeigefeld-Moduls (30) angezeigt wird;
eine Tonverarbeitungseinheit (10h), die den Lautsprecher veranlasst, den Ton auszugeben;
eine Stromquellenschaltung (10i) zum Umwandeln von Eingangsspannung einer Primärseite in eine vorgegebene Spannung über einen Transformator und zum Ausgeben der vorgegebenen Spannung an einer Sekundärseite;
ein Gehäuse zum Aufnehmen des Plasmaanzeigefeld-Moduls (30), des Lautsprechers (10g), des Tuners (10d), der Bildverarbeitungseinheit (10f), der Tonverarbeitungseinheit (10h), der Stromquellenschaltung (10i), des Rahmenelementes (50), des rechten sich vertikal erstreckenden Verstärkungsrahmens (42) und des linken sich vertikal erstreckenden Verstärkungsrahmens (43);
wobei das Gehäuse zwei in einer unteren Fläche ausgebildete Einführöffnungen aufweist;
das Rahmenelement (50) an dem Plasmaanzeigefeld-Modul (30) so angebracht ist, dass es eine obere, untere, linke und rechte Seite des Plasmaanzeigefeld-Moduls (30) umgibt, um das Plasmaanzeigefeld-Modul (30) von einer Vorderseite her zu tragen;
der rechte und der linke sich vertikal erstreckende Verstärkungsrahmen (42, 43) aus langen Metallplatten bestehen und geformt werden, indem bewirkt wird, dass ein oberer und ein unterer Endabschnitt der langen Metallplatten in einer Breitenrichtung so gebogen werden, dass der obere und der untere Endabschnitt der langen Metallplatte im Querschnitt im Wesentlichen U-förmig ausgebildet sind;
der rechte und der linke sich vertikal erstreckende Verstärkungsrahmen (42, 43) mit Löchern (71) versehen sind, in denen Wandanbringungsteile angebracht werden sollen;
sich das aus linken und rechtem Fuß (41, 40) bestehende Paar von Bereichen der Verstärkungsrahmen, die an die unteren Endabschnitte des linken und des rechten sich vertikal erstreckenden Verstärkungsrahmens (43, 42) angrenzen, nach unten erstreckt und aus dem Gehäuse (20) über die Einführöffnungen des Gehäuses (20) nach außen vorsteht;
der linke und der rechte Fuß (41, 40) zylindrisch Schafte (41 a, 40a) enthalten, die lösbar an dem linken und dem rechten sich vertikal erstreckenden Verstärkungsrahmen (43, 42) angeschraubt sind;
die Einführöffnungen so ausgebildet sind, dass sie Kreisformen haben, die zulassen, dass die Schafte (41 a, 40a) des linken und des rechten Fußes gedreht werden;
die Vorsprünge (41 b, 40b) eine rechte Schraube (40b), die an einer Seite des rechten Fußes (40) angebracht ist und von dem rechten Fuß (40) so vorsteht, dass sie rechtwinklig zu dem rechten Fuß (40) ist; und
eine linke Schraube (41 b) umfassen, die an einer Seite des linken Fußes (41) angebracht ist und von dem linken Fuß so vorsteht, dass sie senkrecht zu dem linken Fuß (41) ist;
die Führungselemente (45, 44) ein rechtes Führungselement (44) umfassen, das eine Anbringungsposition des rechten Fußes (40) bestimmt und den rechten Fuß (40) in einer ersten Anbringungsrichtung führt;
wobei das rechte Führungselement (44) an dem Bereich des rechten sich vertikal erstreckenden Verstärkungsrahmens (42) angebracht ist, der an den unteren Endabschnitt des rechten sich vertikal erstreckenden Verstärkungsrahmens (42) angrenzt;
das rechte Führungselement (44) beabstandete seitliche Abschnitte und einen Zwischenabschnitt enthält, der die beabstandeten seitlichen Abschnitte miteinander verbindet; und
ein linkes Führungselement (45), das eine Anbringungsposition des linken Fußes (40) bestimmt und den linken Fuß (41) in eine Anbringungsrichtung führt;
wobei das linke Führungselement (45) an dem Bereich des linken sich vertikal erstreckenden Verstärkungsrahmens (43) angebracht ist, der an den unteren Endabschnitt des linken sich vertikal erstreckenden Verstärkungsrahmens (43) angrenzt;
das linke Führungselement (45) beabstandete seitliche Abschnitte und einen Zwischenabschnitt enthält, der die beabstandeten seitlichen Abschnitte miteinander verbindet;
und die horizontal verlaufenden Durchgangsschlitze (45a, 44a) umfassen:
einen rechten horizontal verlaufenden Durchgangsschlitz (44a), der in dem rechten Führungselement (44) so ausgebildet ist, dass er horizontal von einem Bereich eines rechten seitlichen Abschnitts des rechten Führungselementes (44), der an ein unteres Ende des rechten seitlichen Abschnitts des rechten Führungselementes (44) angrenzt, zu einem im Wesentlichen mittigen Bereich des Zwischenabschnitts des rechten Führungselementes (44) verläuft;
wobei die rechte Schraube (40b) des rechten Fußes (40) funktional mit dem rechten horizontal verlaufenden Durchgangsschlitz (44a) in Eingriff ist und in einer Drehrichtung des Schaftes (40a) des rechten Fußes (40) in dem rechten horizontal verlaufenden Führungsschlitz (44a) geführt wird, nachdem der Schaft (40a) des rechten Fußes (40) von dem rechten sich vertikal erstreckenden Verstärkungsrahmen (42) gelöst ist;
und die vertikal verlaufenden Durchgangsschlitze (45b, 44b) umfassen:
einen rechten vertikal verlaufenden Durchgangsschlitz (44b), der in dem rechten Führungselement (44) so ausgebildet ist, dass er durchgehend vertikal von einem rechten Ende des rechten horizontal verlaufenden Durchgangsschlitzes (44a) aus verläuft; und
wobei die rechte Schraube (40b) des rechten Fußes (40) funktional mit dem rechten vertikal verlaufenden Durchgangsschlitz (44b) in Eingriff ist und entsprechend einer vertikalen Bewegung des Schaftes (40a) des rechten Fußes (40) vertikal in dem rechten vertikal verlaufenden Durchgangsschlitz (44b) geführt wird, nachdem der Schaft (40a) des rechten Fußes (40) von dem rechten sich vertikal erstreckenden Verstärkungsrahmen (42) gelöst ist;
und die horizontal verlaufenden Durchgangsschlitze (45a, 44a) des Weiteren umfassen:
einen linken horizontal verlaufenden Durchgangsschlitz (45a), der in dem linken Führungselement (45) so ausgebildet ist, dass er horizontal von einem Bereich eines linken Seitenabschnitts des linken Führungselementes (45), der an ein unteres Ende des linken Seitenabschnitts des linken Führungselementes (45) angrenzt, zu einem im Wesentlichen mittigen Bereich des Zwischenabschnitts des linken Führungselementes (45) verläuft;
wobei die linke Schraube (41b) des linken Fußes (41) funktional mit dem linken horizontal verlaufenden Führungsschlitz (45a) in Eingriff ist und in einer Drehrichtung des Schaftes (41 a) des linken Fußes (41) in dem linken horizontal verlaufenden Führungsschlitz (45a) entlang geführt wird, nachdem der Schaft (41 a) des linken Fußes (41) von dem linken sich vertikal erstreckenden Verstärkungsrahmen (42) gelöst ist; und
die vertikal verlaufenden Durchgangsschlitze (45b, 44b) des Weiteren umfassen:
einen linken vertikal verlaufenden Durchgangsschlitz (45b), der in dem linken Führungselement (45) so ausgebildet ist, dass er durchgehend vertikal von einem rechten Ende des linken horizontal verlaufenden Durchgangsschlitzes (45a) aus verläuft; und
wobei die linke Schraube (41b) des linken Fußes (41) funktional mit dem linken vertikal verlaufenden Durchgangsschlitz in Eingriff ist und entsprechend einer vertikalen Bewegung des Schaftes (41a) des linken Fußes (41) vertikal in dem linken vertikal verlaufenden Durchgangsschlitz (45b) geführt wird, nachdem der Schaft (41 a) des linken Fußes (41) von dem linken, sich vertikal erstreckenden Verstärkungsrahmen (43) gelöst ist.

3. Flachbildschirm-Fernseher nach Anspruch 1, wobei die Führungsstrukturen eine Vielzahl vertikal beabstandeter, horizontal verlaufender Durchgangsschlitze (45c, 45d, 44c, 44d) umfassen, die relativ zu den ersten horizontal verlaufenden Durchgangsschlitzen (41b, 40b) vertikal versetzt sind.

4. Flachbildschirm-Fernseher nach Anspruch 1 oder 3, wobei die Führungsstruktur eine erste Führungsstruktur (44a, 44b) zum Führen des rechten Fußes (40) sowie eine zweite Führungsstruktur (45a, 45b) zum Führen des linken Fußes (41) umfasst und die erste Führungsstruktur (44a, 44b) sowie die zweite Führungsstruktur (45a, 45b) relativ zueinander symmetrisch sind.

5. Flachbildschirm-Fernseher nach Anspruch 1 oder 3, wobei die Führungsstruktur eine erste Führungsstruktur (44a, 44b) zum Führen des rechten Fußes (40) sowie eine zweite Führungsstruktur (45a, 45b) zum Führen des linken Fußes (41) umfasst und die erste sowie die zweite Führungsstruktur (44a, 44b, 45a, 45b) an jedem der Führungselemente (44, 45) und vertikal voneinander beabstandet vorhanden sind.

6. Flachbildschirm-Fernseher nach einem der Ansprüche 1 und 3 bis 5, wobei jeder der Füße (41, 40) einen Basisabschnitt (41 c, 40c) und einen Schaft (41 a, 40a) enthält, der sich vertikal von dem Basisabschnitt aus erstreckt, und der Basisabschnitt (41 c, 40c) einen vorderen Bereich sowie einen hinteren Bereich um den Schaft (41 a, 40a) herum hat und der vordere Bereich des Basisabschnitts (41 c, 40c) länger ist als der hintere Bereich des Basisabschnitts (41 c, 40c).

## Revendications

1. Télévision à écran plat comprenant :
un panneau d'affichage (30) adapté pour afficher une image par le biais de son écran ;
un élément de châssis (50) supportant le panneau d'affichage (30) et entourant une partie périphérique du panneau d'affichage (30) ;
une paire de socles gauche et droit (41, 40) pour permettre au panneau d'affichage (30) d'être supporté par leur biais, afin d'être verticalement droit avec l'écran du panneau d'affichage (30) qui est orienté vers un côté avant ;
des éléments de guidage (45, 44) pour définir des positions de montage des socles (41, 40) et guider les socles (41, 40) dans les directions de montage ;
les éléments de guidage (45, 44) prévus avec des structures de guidage ; et
un espace de stockage prévu au niveau d'une partie inférieure de la télévision à écran plat (10),
**caractérisée en ce que :**
la télévision à écran plat comprend en outre :
une paire de châssis de renforcement gauche et droit (43, 42) s'étendant verticalement, agencés à l'arrière du panneau d'affichage (30) avec leurs extrémités supérieure et inférieure fixées sur le panneau d'affichage (30) et latéralement espacées l'une de l'autre pour renforcer l'élément de châssis (50) dans une direction verticale ;
les socles gauche et droit (41, 40) étant fixés de manière amovible sur les régions des châssis de renforcement (43, 42) qui sont adjacentes aux parties d'extrémité inférieures des châssis de renforcement (43, 42) ;
des saillies (41b, 40b) faisant saillie à partir des côtés des socles, perpendiculairement aux socles (43, 42) ;
les éléments de guidage (45, 44) positionnés au niveau des régions des châssis de renforcement (43, 42) qui sont adjacents aux parties d'extrémité inférieure des châssis de renforcement (43, 42) ;
les structures de guidage comprenant des fentes de passage (45a, 44a) s'étendant horizontalement pour guider les socles (41, 40) dans des directions de rotation tout en étant mis en prise avec les saillies (41b, 40b) et des fentes de passage (45b, 44b) s'étendant verticalement, s'étendant de manière continue verticalement à partir des terminaisons des fentes de passage (45a, 44a) s'étendant horizontalement, pour guider les socles (41, 40) verticalement tout en étant mis en prise avec les saillies (41b, 40b) ; et
dans laquelle lorsque les saillies (41b, 40b) sont positionnées aux terminaisons des fentes de passage (45a, 44a) s'étendant horizontalement qui ne sont pas raccordées aux fentes de passage (45b, 44b) s'étendant verticalement, les socles (41, 40) peuvent amener la télévision à écran plat (10) à être verticalement droite et lorsque les saillies (41b, 40b) sont positionnées au niveau des terminaisons supérieures des fentes de passage (45b, 44b) s'étendant verticalement, les socles (41, 40) peuvent être autorisés à être logés dans l'espace de stockage.

2. Télévision à écran plat selon la revendication 1, **caractérisée en ce que** la télévision à écran plat est une télévision plasma ;
le panneau d'affichage (30) est un module de panneau d'affichage au plasma (30) pour afficher une image par le biais de son écran et la télévision plasma comprend en outré :
un haut-parleur (10g) pour émettre des sons ;
une antenne pour recevoir les signaux de diffusion de télévision ;
un tuner (10d) pour extraire un signal de diffusion de télévision d'une chaîne sélectionnée provenant des signaux de diffusion de télévision reçus par l'antenne, et émettre les signaux de diffusion de télévision ;
une unité de traitement d'image (10f) pour amener l'image à être affichée sur l'écran du module de panneau d'affichage au plasma (30) sur la base des signaux de diffusion de télévision émis par le tuner ;
une unité de traitement audio (10h) pour amener le haut-parleur à émettre les sons ;
un circuit de source de puissance (10i) pour transformer la tension d'entrée d'un côté primaire en tension prédéterminée via un transformateur et émettre la tension prédéterminée au niveau d'un côté secondaire ;
une carcasse pour loger le module de panneau d'affichage au plasma (30), le haut-parleur (10g), le tuner (10d), l'unité de traitement d'image (10f), l'unité de traitement audio (10h), le circuit de source de puissance (10i), l'élément de châssis (50), le châssis de renforcement droit s'étendant verticalement (42) et le châssis de renforcement gauche s'étendant verticalement (43) ;
la carcasse ayant deux ouvertures d'insertion formées dans une surface inférieure ;
l'élément de châssis (50) étant monté sur le module de panneau d'affichage au plasma (30) afin d'entourer les côtés supérieur, inférieur, gauche et droit du module de panneau d'affichage au plasma (30) pour supporter le module de panneau d'affichage au plasma (30) depuis un côté avant ;
les châssis de renforcement droit et gauche s'étendant verticalement (42, 43) étant réalisés à partir de plaques métalliques longitudinales et formés en amenant les parties d'extrémité supérieure et inférieure des plaques métalliques longitudinales à être fléchies dans le sens de la largeur de sorte que les parties d'extrémité supérieure et inférieure des plaques métalliques longitudinales sont chacune formées sensiblement selon une forme de U en coupe ;
les châssis de renforcement droit et gauche s'étendant verticalement (42, 43) configurés avec des trous (71) dans lesquels les kits de montage de paroi doivent être montés ;
la paire de socles gauche et droit (41, 40) s'étendant vers le bas à partir des régions des châssis de renforcement qui sont adjacents aux parties d'extrémité inférieure des châssis de renforcement gauche et droit s'étendant verticalement (43, 42), et faisant saillie hors de la carcasse (20) via les ouvertures d'insertion de la carcasse (20) ;
les socles gauche et droit (41, 40) comprenant des tiges cylindriques (41a, 40a) fixées par vis de manière amovible sur les châssis de renforcement gauche et droit s'étendant verticalement (43, 42) ;
les ouvertures d'insertion étant formées afin d'avoir des formes circulaires qui permettent aux tiges (41a, 40a) des socles gauche et droit d'être entraînées en rotation ;
les saillies (41b, 40b) comprenant un boulon droit (40b) fixé sur un côté du socle droit (40) et faisant saillie du socle droit (40) afin d'être perpendiculaire au socle droit (40) ; et
un boulon gauche (41b) fixé sur un côté du socle gauche (41) et faisant saillie du socle gauche (41) afin d'être perpendiculaire au socle gauche (41) ;
les éléments de guidage (45, 44) comprenant un élément de guidage droit (44) pour définir une position de montage du socle droit (40) et guider le socle droit (40) dans une première direction de montage ;
l'élément de guidage droit (44) étant fixé sur la région du châssis de renforcement droit s'étendant verticalement (42) qui est adjacente à la partie d'extrémité inférieure du châssis de renforcement droit s'étendant verticalement (42) ;
l'élément de guidage droit (44) comprenant des parties latérales espacées et une partie intermédiaire interconnectant les parties latérales espacées ; et
un élément de guidage gauche (45) pour définir une position de montage du socle gauche (40) et guider le socle gauche (41) dans une direction de montage ;
l'élément de guidage gauche (45) étant fixé sur la région du châssis de renforcement gauche s'étendant verticalement (43) qui est adjacente à la partie d'extrémité inférieure du châssis de renforcement gauche s'étendant verticalement (43) ;
l'élément de guidage gauche (45) comprenant des parties latérales espacées et une partie intermédiaire interconnectant les parties latérales espacées ;
les fentes de passage s'étendant horizontalement (45a, 44a) comprenant :
une fente de passage droite s'étendant horizontalement (44a) formée dans l'élément de guidage droit (44) afin de s'étendre horizontalement à partir d'une région d'une partie latérale droite de l'élément de guidage droit (44) qui est adjacente à une extrémité inférieure de la partie latérale droite de l'élément de guidage droit (44), jusqu'à une région sensiblement centrale de la partie intermédiaire de l'élément de guidage droit (44) ;
le boulon droit (40b) du socle droit (40) se mettant en prise de manière opérationnelle avec la fente de passage droite s'étendant horizontalement (44a) et guidé le long de la fente de passage droite s'étendant horizontalement (44a) dans un sens de rotation de la tige (40a) du socle droit (40) après que la tige (40a) du socle droit (40) a été libérée du châssis de renforcement droit s'étendant verticalement (42) ;
les fentes de passage s'étendant verticalement (45b, 44b) comprenant :
une fente de passage droite s'étendant verticalement (44b) formée dans l'élément de guidage droit (44) afin de s'étendre de manière continue, verticalement à partir d'une terminaison droite de la fente de passage droite s'étendant horizontalement (44a) ;
le boulon droit (40b) du socle droit (40) se mettant en prise de manière opérationnelle avec la fente de passage droite s'étendant verticalement (44b) et guidé verticalement le long de la fente de passage droite s'étendant verticalement (44b) selon le mouvement vertical de la tige (40a) du socle droit (40) après que la tige (40a) du socle droit (40) a été libérée du châssis de renforcement droit s'étendant verticalement (42) ;
les fentes de passage s'étendant horizontalement (45a, 44a) comprenant en outre :
une fente de passage gauche s'étendant horizontalement (45a) formée dans l'élément de guidage gauche (45) afin de s'étendre horizontalement à partir d'une région d'une partie latérale gauche de l'élément de guidage gauche (45) qui est adjacente à une extrémité inférieure de la partie latérale gauche de l'élément de guidage (45), jusqu'à une région sensiblement centrale de la partie intermédiaire de l'élément de guidage gauche (45) ;
le boulon gauche (41b) du socle gauche (41) se mettant en prise de manière opérationnelle avec la fente de passage gauche s'étendant horizontalement (45a) et guidé le long de la fente de passage gauche s'étendant horizontalement (45a) dans un sens de rotation de la tige (41a) du socle gauche (41) après que la tige (41a) du socle gauche (41) a été libérée du châssis de renforcement gauche s'étendant verticalement (42) ; et
les fentes de passage s'étendant verticalement (45b, 44b) comprenant en outre :
une fente de passage gauche s'étendant verticalement (45b) formée dans l'élément de guidage gauche (45) afin de s'étendre de manière continue verticalement à partir d'une terminaison droite de la fente de passage gauche s'étendant horizontalement (45a) ; et
le boulon gauche (41b) du socle gauche (41) se mettant en prise de manière opérationnelle avec la fente de passage gauche s'étendant verticalement et guidé verticalement le long de la fente de passage gauche s'étendant verticalement (45b) selon le mouvement vertical de la tige (41a) du socle gauche (41) après que la tige (41a) du socle gauche (41) a été libérée du châssis de renforcement gauche s'étendant verticalement (43).

3. Télévision à écran plat selon la revendication 1, dans laquelle les structures de guidage comprennent une pluralité de fentes de passage s'étendant horizontalement, verticalement espacées (45c, 45d, 44c, 44d) qui sont verticalement décalées par rapport aux premières fentes de passage s'étendant horizontalement (41b, 40b).

4. Télévision à écran plat selon la revendication 1 ou 3, dans laquelle la structure de guidage comprend une première structure de guidage (44a, 44b) pour guider le socle droit (40) et une seconde structure de guidage (45a, 45b) pour guider le socle gauche (41), la première structure de guidage (44a, 44b) et la seconde structure de guidage (45a, 45b) étant symétriques entre elles.

5. Télévision à écran plat selon la revendication 1 ou 3, dans laquelle la structure de guidage comprend une première structure de guidage (44a, 44b) pour guider le socle droit (40) et une seconde structure de guidage (45a, 45b) pour guider le socle gauche (41), les première et seconde structures de guidage (44a, 44b, 45a, 45b) étant prévues au niveau de chacun des éléments de guidage (44, 45) et verticalement espacées l'une de l'autre.

6. Télévision à écran plat selon l'une quelconque des revendications 1 et 3 à 5, dans laquelle chacun des socles (41, 40) comprenant une partie de base (41c, 40c) et une tige (41a, 40a) s'étendant verticalement à partir de la partie de base, la partie de base (41c, 40c) ayant une région avant et une région arrière autour de la tige (41a, 40a), la région avant de la partie de base (41c, 40c) étant plus longue que la région arrière de la partie de base (41c, 40c).
